Europäisches Patentamt

(19) European Patent Office

Office européen des brevets

(11) Numéro de publication: **0 006 382**
**B1**

(12) **FASCICULE DE BREVET EUROPEEN**

(45) Date de publication du fascicule de brevet: **25.11.81**

(51) Int. Cl.³: **A 01 N 63/00, C 12 N 1/20**

(21) Numéro de dépôt: **79400377.2**

(22) Date de dépôt: **11.06.79**

(54) Nouvel agent nématophage et procédé pour maîtriser la croissance des nématodes du genre méloidogyne.

(30) Priorité: **13.06.78 FR 7817624**

(43) Date de publication de la demande:
**09.01.80 Bulletin 80/1**

(45) Mention de la délivrance du brevet:
**25.11.81 Bulletin 81/47**

(84) Etats Contractants Désignés:
**BE CH DE GB IT NL**

(56) Documents cités:
**FR - A - 1 329 396**
**GB - A - 857 161**

**CHEMICAL ABSTRACTS, vol. 79, n° 15, 15 octobre 1973, page 18, abrégé 89200s Columbus, Ohio, USA Z.E. BEKKER et al.: "Nematocidal substances from mycellium of Arthrobotrys species detected by thin-layer chromatography"**

**CHEMICAL ABSTRACTS, vol. 85, n° 23, 6 décembre 1976, page 134 abrégé 172755w* Columbus, Ohio, USA I.I. SIDOROVA et al.: "Effect of glucose and ammonium nitrate on the aggressiveness of predatcry fungi in relation to nematodes"**

(73) Titulaire: **INSTITUT NATIONAL DE LA RECHERCHE AGRONOMIQUE (INRA)**
**149, rue de Grenelle**
**F-75341 Paris Cedex 07 (FR)**

(72) Inventeur: **Cayrol, Jean-Claude**
**Villa Sarigoulette Bois Fleuri**
**F-06410 Biot (FR)**

(74) Mandataire: **Corre, Jacques Denis Paul et al,**
**Cabinet Regimbeau 26, Avenue Kléber**
**F-75116 Paris (FR)**

**0 006 382**

Nouvel agent nématophage et procédé pour maîtriser la croissance des nématodes du genre méloidogyne.

La présente invention concerne un nouvel agent nématophage destiné à lutter contre les nématodes du genre Meloidogyne, ainsi qu'un procédé pour maîtriser la croissance de ces nématodes dans les cultures maraîchères et florales ainsi que dans les plants de pépinières.

Les nématodes du genre Meloidognye, qui sont des nématodes des racines noueuses, constituent un des principaux ennemis notamment des cultures maraîchères et florales, surtout dans les régions méridionales et dans les cultures en serres. Ces nématodes, extrêmement polyphages, attaquent pratiquement toutes les cultures et sont de ce fait responsables de baisses de rendement catastrophiques atteignant fréquemment 50 à 70%.

Pour lutter contre ces nématodes on a bien sûr tout d'abord envisagé de désinfections préventives répétées des sols avant la plantation, à l'aide de produits nématicides qui sont malheureusement toujours coûteux et dangereux.

Dans la technique antérieure, différents champignons prédateurs, en particulier des champignons du genre Arthrobotrys, ont déjà été proposés en tant qu'agents nématophages. Cette technique antérieure peut par exemple être illustrée par le brevet français n° 1 329 396, le brevet britannique n° 857 161 et les passages des Chemicals Abstracts vol.85, 1976, page 134, article 172 755w et vol.79, 1973, page 182, article 89200s.

La présente invention se rapporte à un nouvel agent nématophage permettant de limiter la pullulation de ces parasites dans des conditions nettement améliorées et à de bien moindresfrais. Il est constitué par un champignon prédateur particulier dénommé Arthrobotrys irregularis n° 1 14lb. Le nouvel agent nématophage se distingue en particulier des diverses espèces d'Hyphomycètes précédemment connues, d'une part par son taux de captures de nématodes nettement amélioré, d'autre part et surtout par la spécificité de son action à l'égard des nématodes du genre meloidogyne.

Il est apparu que cette spécificité d'activité du nouvel agent nématophage selon l'invention est de nature biochimique. En effet, les organes de captures du champignon prédateur selon l'invention sécrètent des lectines types qui s'associent chimiquement à des sucres spécifiques exsudés par l'épiderme des seuls meloidogynes. Par suite, le champignon prédateur selon l'invention n'est donc susceptible de s'attaquer qu'aux nématodes sécrétant ce type de sucres, d'où la grande spécificité d'activité. Cette propriété est fondamentale car le présent agent nématophage ne détruit pas les autres nématodes utiles du sol, tels, que les nématodes carnivores détruisant les organismes nuisibles à l'agriculture, et par suite ne perturbe pas le'équilibre biologique du sol.

Une étude comparative de l'aggressivité de six souches de champignons nématophages vis-à-vis des larves de meloidogyne a permis de mettre en évidence les avantages de l'objet de la présente invention par rapport à la technique antérieure la plus proche. Cette étude peut être résumée de la manière suivante:

**1 — PROTOCOLE EXPERIMENTAL**

Cette étude est relative à la comparaison de l'activité prédatrice de six espèces d'Hyphomycètes prédateurs vis-à-vis des larves infestantes de *Meloidogyne*.

**2 — METHODE**

La technique utilisée est dite "technique des minicultures".

Elle consiste à étaler un film d'eau gélosée à 0,5% sur une lame de verre et à ensemencer ce substrat avec un inoculum de champignon nématophage.

La lame de verre ainsi préparée est disposée dans une boîte de Petri humide.

Au bout de 48 heures, le champignon s'est suffisamment développé et on introduit dans les cultures vingt larves de Meloidogyne.

Deux jours plus tard, on note le nombre de larves capturées dans chaque cas.

Quatre répétitions sont faites pour chaque champignon.

**3 — CHAMPIGNONS EPROUVES**

Les six champignons suivants ont été testés:
— Arthrobotrys irregularis n° 1 14lb (souche selon l'invention)
— Arthrobotrys oligospora,
— Arthrobotrys robusta,
— Dactylaria candida,
— Dactylella lysipaga,
— Monacrosporium doedycoides.

**4 — RESULTATS OBTENUS**

Le tableau ci-après récapitule les résultats obtenus.

# 0 006 382

TABLEAU

Nombre de larves de Meloidogyne piégées par les six
champignons en 48 heures

| Champignons | Nombre de larves piégées | | | | |
|---|---|---|---|---|---|
| | Boîte 1 | Boîte 2 | Boîte 3 | Boîte 4 | moyenne |
| Arthrobotrys irregularis no 1 14lb | 12 | 9 | 14 | 16 | 12,75 |
| Arthrobotrys oligospora | 4 | 7 | 0 | 2 | 3,25 |
| Arthrobotrys robusta | 2 | 3 | 5 | 1 | 2,75 |
| Dactylaria candida | 0 | 1 | 0 | 0 | 0,25 |
| Dactylella lysipaga | 2 | 1 | 0 | 0 | 0,75 |
| Monacrosporium doedycoides | 0 | 0 | 1 | 0 | 0,25 |

CONCLUSION

Il résulte clairement de cet essai que l'Arthrobotrys irregularis n° 1 14lb est le plus actif des champignons éprouvés. Le taux de piégeage de 63,7% qu'il permet est parfaitement satisfaisant.

Conformément à la présente invention, le nouvel agent nématophage, destiné à lutter contre les nématodes du genre Meloidogyne, est constitué par un champignon prédateur de la classe des Hyphomycètes, ci-après dénommé Arthrobotrys irregularis n° 1 141 b. La souche d'Arthrobotyrs irregularis n° 1 141 b, qui a été extraite du sol, s'apparente à l'Arthrobotrys tortor récemment décrit par Nelly Jarowaja en Pologne (1968 — Arthrobotrys tortor sp. nov. New predacious nematode killing fungi. Acta Mycologia, vol. IV—2 : 241—247).

Arthrobotrys irregularis n° 1 141 b est un mycèlium composé d'hyphes cloisonnées de 3,4 à 5,1 $\mu$ de large produisant des boucles tridimensionnelles d'environ 32 $\mu$ de diamètre.

Il présente des conidiophores hyalins, dressés, cloisonnés, jamais ramifiés et ayant de 6,8 à 8,4 $\mu$ de large à leur base et 3,4 $\mu$ à leur apex. Il convient ici d'observer qu'en revanche l'espèce dite Arthrobotrys tortor, décrite par Jarowaja, présente des ramifications du conidiophore. Les conidiophores se terminent par un renflement irrégulier et sont hérissés de petits stigmates en forme d'épine. Les conidies sont disposées en groupes désordonnés à l'extrémité des conidiophores. On remarquera également que dans la souche d'Arthrobotrys irregularis n° 1 141 b, il n'a jamais été observé de conidies intercalaires le long du conidiophore, alors que Jarowaja signale cette caractéristique dans la description de son espèce.

Les conidies sont hyalines, ovoïdes, légèrement arrondies à leur base. Elles sont divisées transversalement en deux cellules irrégulières, la cellule inférieure se terminant en pointe vers le bas, tandis que celle du haut est ronde et renflée. La cloison est à peu près au milieu de la conidie. La taille moyenne des conidies est de 27,7 $\mu$ de long sur 11 $\mu$ de large.

Les chlamydospores sont intercalaires, globuleuses, isolées ou en courtes chaînes. Chacune d'elles mesure environ 25 $\mu$ de diamètre.

La souche d'Arthrobotrys irregularis n° 1 141 b présente également quelques analogies avec l'Arthrobotrys conoides décrit par Drechsler Ch. (1937—Some Hyphomycetes that prey on free living terricolous nematodes. Mycologia 29 : 447—556), mais elle en diffère toutefois par le fait qu'elle n'a pas de conidies intercalaires. Elle est plus proche d'Arthrobotrys tortor dans l'ensemble de ses cractères et surtout par ses conidies qui sont plus rondes et trappues que celles d'Arthrobotrys conoides, beaucoup plus élancées.

La figure 1 annexée représente, à plus grande échelle, les conidie (A), piège (B), chlamydospores (C) et conidiophore (D) d'Arthrobotrys irregularis 1 141 b.

La souche d'Arthrobotrys irregularis 1 141 b a fait l'objet d'un dépôt auprès de la Mycothèque de l'Institut Pasteur le 2 juin 1978, où elle a été enregistrée sous le n° 1166—78.

3

La présente invention concerne également un procédé pour maîtriser la croissance des nématodes du genre Meloidogyne dans les cultures maraîchères et florales ainsi que dans les plants de pépinières. Ce procédé est caractérisé par le fait que l'on incorpore dans le sol à traiter une quantité appropriée de l'agent nématophage constitué par le champignon prédateur Arthrobotrys irregularis 1 141 b, décrit précédemment.

Selon une autre caractéristique de procédé de la présente invention, ledit agent nématophage est de préférence mis en place dans le sol à traiter environ 30 jours avant la plantation.

Selon une autre caractéristique de la présente invention, pour des plantes livrables en mottes, godets ou conteneurs, on incorpore directement l'agent nématophage au sein de la motte, du godet ou du conteneur.

Selon une autre caractéristique de la présente invention, la colonisation du sol par l'agent nématophage est réalisée avant ou pendant la plantation de plantes qui ne souffrent pas des attaques des Meloidogyne parce qu'elles ne restent que trop peu de temps en place et/ou qu'elles font leur cycle en hiver où les Meloidogyne ne sont pas actifs. Une telle variante du procédé et de l'invention permet, du fait de l'action rémanente de l'agent nématophage, de préparer le sol en vue d'une plantation ultérieure.

D'autres caractéristiques et avantages apparaîtront à la lecture de la description détaillée faite ci-après à propos de quelques modes de réalisation et de mise en oeuvre particuliers.

La souche d'Arthrobotrys irregularis n° 1 141 a été sélectionnée parmi un grand nombre de souche de champignons prédateurs isolés dans différents types de sols français. L'agressivité de ces diverses souches vis-à-vis des Meloidogyne a tout d'abord été testée lors d'essais in-vitro effectués en mini-culture. Ces essais in-vitro ont consisté à étaler aseptiquement sur une lame de verre, un film d'eau gélosée à 0,5%. Ce film est ensuite ensemencé avec le champignon prédateur. Lorsque celui-ci a envahi la totalité de la surface, environ 48 heures plus tard, on dépose aseptiquement sur le milieu 10 larves L2 désinfectées de Meloidogyne. La stérilisation est obtenue par une immersion d'environ 1 minute dans l'acide mercurothiolique à 1 pour 1000 et pendant 1 minute dans du sulfate de streptomycine à 1 pour 1000, puis on procède au rinçage à l'eau stérile. On note ensuite régulièrement tous les deux jours, pendant 10 jours, l'importance du piégeage, par observation de chaque lame à la loupe binoculaire dans une pièce stérile. Parmi les 31 espèces de champignons prédateurs testées, la souche d'Arthrobotrys irregularis n° 1 141 b a de loin fait preuve de la plus forte activité prédatrice vis-à-vis de ces nématodes, étant donné qu'elle détruit environ 90% des jeunes larves de Meloidogyne. Ultérieurement il a été vérifié que la souche d'Arthrobotrys irregularis n° 1 141 b capture et détruit en effet très rapidement toutes les jeunes larves infestantes nouvellement écloses, avant que celles-ci n'aient le temps de pénétrer dans les radicelles de la plante hôte.

Il a par ailleurs été observé que le développement d'Arthrobotrys irregularis n° 1 141 b était très rapide. Du fait de sa croissance mycélienne très rapide cette souche peut donc être utilisée de façon tout à fait satisfaisante dans la pratique en tant qu'agent nématophage dans les cultures maraîchères et florales ainsi que dans les plants de pépinières.

Dans le cadre des essais relatifs à l'aptitude d'implantation de la nouvelle souche dans divers sols cultivés, il a été observé que le champignon s'installe mieux dans les sols de réaction neutre et alcaline que dans les sols acides. Ces résultats sont donc fort intéressants, étant donné que les cultures maraîchères et florales exigent des pH voisins de 7, ce que permet donc une colonisation aisée du sol.

Il a également été noté par ailleurs que le champignon prédateur envahit beaucoup plus intensément le milieu quand il est introduit à forte dose, mais ceci ne l'empêche pas de coloniser les substrats de manière appréciable même à la dose de 10% du volume de terre.

L'activité prédatrice de la souche Arthrobotrys irregularis 1 141 b a par ailleurs été confirmée par un certain nombre d'essais d'application pratiques dont quelques résultats sont rappelés ci-après à titre indicatif.

I. *Expérimentation en serre sur cultures de tomates en pots*

Dans le cadre de cette expérience on a préparé 40 pots qui ont été remplis de sols stérlisés à la vapeut et répartis en 4 lots de 10. Ces 4 lots sont répartis de la manière indiquée ci-après.

# O 006 382

TABLEAU I

| sans champignon prédateur | lot 1 : | chaque pot reçoit un plant de tomate |
|---|---|---|
| | lot 2 : | chaque pot reçoit un plan de tomate et est infesté avec 1 500 oeufs de Meloidogyne déposés à proximité des radicelles |
| avec champignon prédateur | lot 3 : | chaque pot reçoit un plan de tomate |
| | lot 4 : | chaque pot reçoit un plan de tomate et est infesté avec 1 500 oeufs de Meloidogyne déposés à proximité des radicelles |

Dans les lots 3 et 4 on incorpore au so la moitié d'un inoculum d'Arthrobotrys préparé en fioles d'Erlen-Meyer sur un milieu à base de son, perlite et blé cuit classiquement utilisés par les pathologistes végétaux.

On suit l'essai, d'une part, en notant la vigueur des plants de tomate, que l'on traduit par une note allant de 0 à 5 (0 = plante morte, 5 = plante parfaite, très vigoureuse) et, d'autre part, en analysant périodiquement le sol pour suivre l'évolution des populations de nématodes.

*Résultats concernant la notation des plantes:*

Les résultats obtenus figurent dans le tableau II. Ils indiquent pour chaque observation, la vigueur moyenne de 10 plants de chaque lot.

TABLEAU II

| Observations | Cas éprouvés | | | | Remarque importante |
|---|---|---|---|---|---|
| | tomates seules (témoins sains) | tomates + Meloidogyne | tomates + champignon prédateur | tomates + Meloidogyne + champignon prédateur | |
| Jour 0 | 1,30 | 0,60 | 0,70 | 0,90 | Le jour 20, les tomates plantées dans l'inoculum de champignon prédateur ont été repiquées en sol normal. C'est donc seulement à patir du jour 30 que les notations sont vraiment comparables. |
| Jour 10 | 1,80 | 1,30 | 0,90 | 0,80 | |
| Jour 20 | 1,20 | 1,70 | 1,08 | 1,07 | |
| Jour 30 | 2,30 | 1,20 | 1,80 | 1,90 | |
| Jour 40 | 2,20 | 2,00 | 2,60 | 2,50 | |
| Jour 50 | 2,60 | 2,10 | 2,50 | 2,30 | |

On constate que jusqu'au jour 30 les plants sont toujours plus faibles dans le cas où ils sont plantés dans l'inoculum du champignon prédateur. Ceci s'explique aisément par le fait que cet inoculum à base de son, perlite et blé cuit, constitue un magma qui est riche en sucre et qui est donc très propice au développement de bactéries et de moucherons divers qui gênent considérablement la croissance racinaire.

A partir du 30ème jour, pour éviter ce phénomène, on a repiqué les plants dans des pots plus grands contenant du terreau stérilisé. De ce fait, l'inoculum de champignon prédateur restait présent

5

dans la motte de repiquage, mais les nouvelles racines formées pouvaient évoluer normalement dans le milieu.

Dès cette date, les résultats deviennent comparatifs entre les 4 lots en l'on constate, dans tous les cas, que la présence du champignon prédateur permet d'obtenir des tomates comparables aux témoins sains, plus vigoureuses que celles infestées par les Meloidogyne.

*Résultats concernant l'évolution des populations de Meloidogyne*

Le tableau III ci-après récapitule l'évolution des populations de Meloidogyne pendant la durée de l'Expérience.

TABLEAU III

| Observations | Cas éprouvés | | | |
|---|---|---|---|---|
| | Tomates seules (témoins sains) | Tomates + Meloidogyne | Tomates + champignon prédateur | Tomates + Meloidogyne + champignon prédateur |
| Jour 10 | 0 | 0 | 0 | 0 |
| Jour 20 | 0 | 45 | 0 | 70 |
| Jour 30 | 0 | 20 | 0 | 35 |
| Jour 40 | 0 | 35 | 0 | 0 |
| Jour 75 | 0 | 29 | 0 | 0 |

Il apparaît que dans le témoin sain non infesté et sans champignon prédateur, ainsi que dans le lot inoculé seulement avec l'Hyphomycète, on ne trouve jamais aucun Meloidogyne, ce que prouve que le terreau utilisé était correctement stérilisé et qu'aucune recontamination accidentelle ne s'est produite au cours de l'essai.

En ce qui concerne les deux autres cas, on constate à partir du 40ème jour, que tous les Meloidogyne ont disparu du lot traité avec le champignon prédateur, alors qu'ils sont présente jusqu'à la fin de l'expérience (75 jours) dans le lot contaminé.

Il apparaît ainsi très clairement qu'il faut environ 1 mois pour que l'Arthrobotrys irregularis n° 1 141 b s'installe dans le sol et assure un protection efficace des plantes.

Il résulte donc de ces expériences que la technique de préparation de l'inoculum du champignon prédateur est importante, car si l'on apporte ce dernier dans un inoculum inadéquat il risque d'entraîner des perturbations au niveau du substrat qui entravent le développement racinaire des plants. Par suite, l'inoculum a été préparé sous la forme de granulés, de la manière suivante. On part de grains de céréales, par exemple de seigle, cuits à la vapeur dans un autoclave, puis l'on ensemence les grains avec la champignon prédateur. Pour permettre cet ensemencement, on ajoute bien sûr, de façon classique, des éléments nutritifs aux grains de céréales qui ont été stérilisés à la vapeur et qui contiennent environ 45 à 50% d'eau, le champignon prédateur se développe ainsi à travers la masse de l'ensemble des grains de céréales. On ajoute par exemple aux grains de céréales des sels de calcium, tels que du carbonate de chaux. Dans la pratique, cette technique de préparation de l'inoculum du champignon prédateur a donné des résultats tout à fait satisfaisants.

Il résulte également de l'essai décrit précédemment qu'il faut environ compter 1 mois pour que le champignon prédateur colonise parfaitement le milieu et manifeste une réelle activité vis-à-vis des Meloidogyne. C'est pourquoi dans un mode de mise en oeuvre particulier du procédé de l'invention, l'agent nématophage sera de préférence mis en place dans le sol à traiter, environ 30 jours avant l'introduction de la culture à protéger.

Dans le cas de culture en plein champ la colonisation du sol peut être effectuée par épandage et enfouissement des grains de céréales cuits à la vapeur et ensemencés avec le champignon prédateur. La dose efficace en traitement de granulés sur sol et enfouissement ultérieur à la griffe ou à la moto-bineuse, est sensiblement comprise entre 50 et 300 g par m2 de sol à traiter, selon qu'il y a peu ou beaucoup de Meloidogyne.

# 0 006 382

II. *Expérimentation en serre sur cultures de tomates Protocole expérimental*

On a rempli 102 pots en matière plastique de 15 cm de diamètre avec 1600 g de sol (soit environ 2 l) provenant d'une parcelle fortement infestée par les Meloidogyne. Ces pots ont été répartis en 12 pots qui ont été gradés comme témoins et 90 pots qui ont été traités avec l'Arthrobotrys irregularis n° 1 141 b, selon des modalités variées (doses et dates différentes).

Au cours de l'expérience rappelée précédemment il est déjà apparu qu'il fallait compter environ 1 mois pour que le champignon colonise bien le sol et atteigne ainsi son efficacité maximale. Dans le cadre de ce second essai, le pouvoir nématicide d'Arthrobotrys irregularis n° 1 141 b a été comparé selon qu'il est introduit dans le substrat 1 mois avnt la plantation, 15 jours avant la plantation et le jour même de la plantation.

Cette plantation consiste à placer un pied de tomates sain dans chaque pot.

Le dispositif expérimental d'ensemble est récapitulé dans le tableau IV ci-après.

TABLEAU IV

| Doses d'inoculum d'Arthrobotrys 1 141 b par pot | Dates d'inoculation du champignon prédateur | | |
|---|---|---|---|
| | 30 jours avant plan-tation A | 15 jours avant plan-tation B | Jour de la plantation C |
| 1,4 gramme | 10 pots | 10 pots | 10 pots |
| 2,8 grammes | 10 pots | 10 pots | 10 pots |
| 5,6 grammes | 10 pots | 10 pots | 10 pots |
| témoin non inoculé | 12 pots | | |

L'essai a été suivi pendant 84 jours par des analyses régulières de la population moyenne des larves de Meloidogyne retrouvées dans le sol dans chacun des cas, comparativement aux témoins. En fin d'essai on a procédé en outre à l'analyse du système radiculaire.

*Résultats*

L'ensemble des résultats obtenus dans le cadre de cette expérimentation sont schématisés sur un histogramme compòsite de la figure 2 des dessins annexés. La figure 2 représente en effet l'évolution des populations de Meloidogyne en fonction des doses d'inoculum d'Arthrobotrys irregularis 1 141 b et des dates d'inoculation. La zone (a) correspond à une inoculation du champignon 30 jours avant la plantation; la zone (b), 15 jours avant la plantation, et la zone (c), le jour même de la plantation.

On constate à l'examen de cet histogramme qu'avec la dose faible (1,4 g par pot, soit 70 g/m2), les populations de Meloidogyne sont toujours importantes, sauf en fin d'expérience où cette dose parvient à abaisser le nombre de nématodes comparativement au témoin.

Avec la dose moyenne (2,8 g par pot, soit 140 g/m2), les résultats sont à peu près similaires, bien que meilleurs qu'avec la dose fiable.

Enfin avec la dose forte (5,6 g par pot, soit 280 g/m2), on ne peut obtenir une disparition totale des Meloidogyne que si le champignon est apporté un mois avant la plantation (cas A).

Les analyses de racines effectuées en fin d'expérience, rappelées au tableau V, confirment les données obtenues par les analyses de sol.

# 0 006 382

## TABLEAU V

Les résultats indiqués représentent le nombre moyen de nématodes
par gramme de racines

| Epoques d'inoculation de l'Arthrobotrys | Stades de développement des Meloidogyne | Traitements | | | |
|---|---|---|---|---|---|
| | | Dose faible (70 g/m²) | Dose moyenne (140 g/m²) | Dose forte (280 g/m²) | Témoin non traité |
| A (30 jours avant plantation) | Femelles | 1,1 | 1,6 | 0 | 6,4 |
| | Larves | 1,4 | 1,2 | 0 | 4,0 |
| | Oeufs | 3,0 | 4,7 | 0 | 2,0 |
| B (15 jours avant plantation) | Femelles | 0,1 | 0,8 | 0,4 | 1,3 |
| | Larves | 0 | 0,5 | 0,3 | 0,8 |
| | Oeufs | 0 | 0,6 | 0 | 0,8 |
| C (jour de la plantation) | Femelles | 1,9 | 2,0 | 1,6 | 1,0 |
| | Larves | 0 | 4,7 | 2,3 | 2,0 |
| | Oeufs | 9,3 | 2,0 | 2,0 | 0 |

On voit, en effet, que c'est seulement dans le cas de doses fotes (280 g/m2), inoculés un mois avant la plantation, que les Meloidogyne sont totalement détruits.

Dans l'ensemble des traitements A et B (ensemencements 30 jours et 15 jours avant plantation) les populations sont toujours très réduites par rapport aux témoins, mais cela risquerait de ne pas suffire à assurer une protection parfaite des plantes, tout au moins dans le cas présent, où l'infestation nématologique de départ était évidemment extrêmement élevée.

En ce qui concerne le cas C (ensemencement le jour de la plantation), l'Arthrobotrys irregularis n° 1 141 b s'avère totalement inactif, ce qui confirme l'expérience rappelée précédemment, selon laquelle, il apparaissait qu'un mois environ lui était nécessaire pour coloniser suffisamment le sol et être réellement efficace.

Il convient cependant de bien remarquer que dans la majorité des cas pratiques, il ne sera pas nécessaire d'utiliser une dose aussi élevée, étant donné qu'il ne faut pas perdre de vue que l'essai a été effectué avec un sol très fortement contaminé et dans des conditions de témpérature et d'humidité extrêmement propices à la prolifération du parasite, ce qui représente des conditions que l'on ne rencontrera jamais dans la pratique.

D'autre part, les sols inoculés sont définitivement colonisés par la champignon prédateur, ce qui assure une protection de longue durée, contrairement aux agents nématicides chimiques dont l'action est fugace.

Différentes expériences destinées à mettre en évidence l'action rémanente du traitement ont en effet démontré que l'on pouvait profiter d'une culture de pommes de terre "primeur", mises en place autour du mois de février et récoltées vers le mois de juin, pour coloniser le sol à l'aide d'Arthrobotrys irregularis 1 141 b, en vue de protéger par exemple une culture de tomates mises en place ultérieurement. Dans le cas particulier de pommes de terre "primeur" mises en place en février et avec traitement simultané du sol, on obtient une protection s'étendant jusqu'en septembre de la même année. C'est ainsi que, conformément à une variante du procédé de l'invention, le traitement du sol peut être effectué durant une culture courte de printemps, en vue de protéger la culture longue estivale qui suivra.

Le procédé de l'invention peut bien entendu être appliqué à toutes les cultures maraîchères, florales ou aux plants de pépinières, toutes ces cultures étant sensibles aux Meloidogyne. Il convient cependant de bien remarquer que certaines de ces plantes ne souffrent pas des Meloidogyne, soit parce qu'elles restent peu de temps en place comme les radis, haricots divers, pois, etc., soit parce qu'elles font leur cycle en hiver à une périoide où les Meloidogyne ne sont pas actifs.

Selon une variante intéressante du procédé de la présente invention, il est donc possible de

8

coloniser le sol par l'agent nématophage juste avant la mise en place de plants qui ne souffrent pas de l'attaque des Meloidogyne. L'action rémanente de l'agent nématophage permet donc de préparer le sol en vue d'une plantation ultérieure qui, elle, sera sensible à ces nématodes.

La présente invention concerne également une autre variante fort intéressante du procédé pour maîtriser la croissance du nématode du genre Meloidogyne dans les cultures maraîchères, florales ainsi que dans les plants de pépinières. A l'heure actuelle, les maraîchers font rarement leurs propres plants et achètent des plants "prêts à planter" dans des établissements spécialisés dans cette production. De tels plants sont donc livrables en mottes, en godets ou encore en conteneurs par exemple dans le cas des arbres fruitiers.

Selon une variante du procédé de l'invention, l'ensemencement par le champignon prédateur s'effectue dès le départ dans les mottes pressées qui sont utilisées pour la fabrication des plantes maraîchers. En opérant de la sorte, il est apparu que, dans les 20 à 30 jours où les plants nouvellement repiqués dans les mottes restent en serre au chaud et à l'humidité, le champignon prédateur a le temps de croître et d'envahir la totalité de la motte qui se comporte alors comme un inoculum lorsqu'elle est mise en place en culture. Cette variante du procédé selon l'invention, applicable aux plants livrables en mottes, godets, conteneurs ou analogues, s'est avéré présenter les avantages décisifs suivants.

Le sol habituellement utilisé pour la confection des mottes est un mélange riche en humus, à pH 7; il est donc particulièrement favorable au développement de l'Arthrobotrys n° 1 141 b. On a par ailleurs constaté que le système radiculaire de la plante se trouve littéralement enveloppé dans le feutrage mycélien qui ne perturbe cependant absolument pas sa croissance. Le système radiculaire est donc protégé des attaques des nématodes, même si la motte est plantée dans un sol particulièrement contaminé. Il apparaît donc ainsi que la jeune plante est bien protégée dès le départ de la végétation, or, c'est généralement lorsqu'une plante est jeune qu'elle craint le plus les attaques des nématodes, alors que lorsqu'elle est âgée et qu'elle développe un système radiculaire abondant, et ne souffre pratiquement plus des attaques nématologiques.

Les différentes expériences conduites ont démontré que la motte constitue un inoculum important, à partir duquel le champignon gagne très facilement le sol environnant. La préparation de tels motte, godet, conteneur ou équivalent ne soulève pas le moindre problème technique d'emploi ni de fabrication de plants. Il suffit en effet d'amener le granulé dans le mélange par exemple à l'aide d'une trémie. La plantation des plantes ainsi préparée s'effectue par ailleurs de façon tout à fait habituelle. Dans la pratique, l'incorporation des grains de céréales ensemencés s'effectue de façon satisfaisante à raison d'environ 3 g de granulés pour environ 100 g de terre.

Que l'on utilise des grains de céréales ensemencés à raison de 2, 4 ou 8 g par motte de 150 g de terre, on obtient dans tous les cas, au moment de la plantation, un envahissement complet de la motte par le feutrage blanc du champignon et la protection à l'égard des agressions nématologiques s'avère dans la pratique tout à fait satisfaisante.

Bien entendu, la présente invention ne se limite pas aux modes de réalisation et aux modes de mise en oeuvre particuliers décrits, mais il est parfaitement possible, sans pour autant sortir du cadre de la présente invention d'en imaginer un certain nombre de variantes de détail. C'est ainsi qu'il convient de bien insister sur le fait que l'agent nématophage et le procédé selon l'invention sont susceptibles de s'appliquer de façon tout à fait satisfaisante à toutes les cultures maraîchères, à toutes les cultures florales ainsi qu'à tous les plants de pépinières. A titre d'exemples de cultures maraîchères livrées en motte pressée, on citera les tomates, les aubergines, les poivrons, les courgettes, les melons, les salades diverses (laitues, scaroles, frisés, etc.). A titre d'exemples de cultures maraîchères qui ne sont pas livrées en motte on citera les artichauts, les carottes, les pommes de terre (culture d'été), les betteraves, les céleris, etc. A titre d'exemples de cultures florales susceptibles d'être protégées conformément à la présente invention, on citera les fleurs coupées telles que les oeillets, rosiers, gerberas, chrysanthèmes, etc., les potées à feuillages décoratifs tels que toutes les plantes vertes de serre, philodendrons, ficus, pothos, sansevieras, cactées, marantas, phenix, etc.) ainsi que les potées à fleurs telles que les cinéraires, cyclamens, primevères, saint-paulias, etc. A titre d'exemples de plants de pépinières, la plupart du temps livrés en conteneurs, on mentionnera tous les plants d'arbustes ornementaux et fruitiers.

Il est bien clair que, suivant que l'on se trouve en présence d'une culture en plein champ ou de plantes livrables en mottes, godets, conteneurs ou analogues, le procédé selon l'invention sera soit mis en oeuvre par épandage et enfouissement de l'inoculum, soit par mise en place directe de l'inoculum dans la motte ou analogue.

## Revendications

1. A titre de nouvel agent nématophage destiné à lutter contre les nématodes du genre Meloidogyne, la souche Arthrobotrys irregularis 1 141b, déposée à la Mycothèque de l'Institut Pasteur sous le n° 1166—78.

2. Procédé pour maîtriser la croissance des nématodes du genre Meloidogyne dans les cultures maraîchères et florales ainsi que dans les plants de pépinières, caractérisé par le fait que l'on incorpore dans le sol à traiter une quantité appropriée de l'agent nématophage selon la revendication 1.

9

3. Procédé selon la revendication 2, caractérisé par le fait que ledit agent nématophage est mis en place dans le sol à traiter environ 30 jours avant la plantation.

4. Procédé selon l'une des revendications 2 et 3, caractérisé par le fait que, pour des cultures en plein champ, la colonisation du sol est effectuée par épandage et enfouissement de grains de céréales cuits à la vapeur et ensemencés avec le champignon prédateur selon la revendication 1.

5. Procédé selon la revendication 4, caractérisé par le fait que ledit épandage est effectué à raison d'environ 50 à 300 g de grains de céréales ensemencés avec le champignon prédateur, par m2 de sol à traiter.

6. Procédé selon l'une des revendications 2 et 3, caractérisé par le fait que, pour des plantes livrables en mottes, godets ou conteneurs, on incorpore directement l'agent nématophage au sein de la motte, du godet ou du conteneur.

7. Procédé selon la revendication 6, caractérisé par le fait que l'agent nématophage est incorporé directement dans la motte, le godet ou le conteneur sous la forme de grains de céréales cuits à la vapeur et ensemencés avec le champignon prédateur selon la revendication 1.

8. Procédé selon la revendication 7, caractérisé par le fait que ladite incorporation s'effectue à raison d'environ 3 g de grains de céréales cuits à la vapeur et ensemencés avec le champignon prédateur, pour 100 g de terre.

9. Procédé selon l'une des revendications 2 à 8, caractérisé par le fait que la colonisation du sol par l'agent nématophage est réalisée avant ou pendant la plantation de plantes qui ne souffrent pas des attaques de Meloidogyne parce qu'elles ne restent que trop peu de temps en place et/ou qu'elles font leur cycle en hiver où les Meloidogynes ne sont pas actifs, ladite colonisation permettant, du fait de l'action rémanente de l'agent nématophage, de préparer le sol en vue d'une plantation ultérieure.

10. Composition nématicide contenant des grains de céréales cuits à la vapeur et ensemencés avec le champignon prédateur Arthrobotrys irregularis 1 141b.

11. Composition selon la revendication 10, caractérisée en ce que lesdits grains de céréales sont enrichis par addition d'éléments nutritifs.

**Claims**

1. As a new nematocidal agent intended to control the growth of nematodes of the meloidogyne species, the strain Arthrobotrys irregularis 1 141b lodged at the Mycotheque of the Institut Pasteur under No. 1166—78.

2. A method for controlling the growth of nematodes of the meloidogyne species in market-gardening produce and flowers and in nursery plants, characterised in that a suitable quantity of the nematocidal agent claimed in Claim 1 is incorporated in the soil to be treated.

3. A method as claimed in Claim 2, characterised in that said nematocidal agent is incorporated in the soil to be treated approximately 30 days before planting.

4. A method as claimed in Claim 2 or 3, characterised in that, for cultivation in the open, colonisation of the soil is carried out by scattering and burying steam-cooked grains of cereals seeded with the predatory fungus claimed in Claim 1.

5. A method as claimed in Claim 4, characterised in that scattering is carried out in quantities of from about 50 to 300 g of cereal grains seeded with the predatory fungus per square metre of soil to be treated.

6. A method as claimed in Claim 2 or 3, characterised in that, for plants deliverable in trays, pots or containers, the nematocidal agent is directly incorporated in the tray, pot or container.

7. A method as claimed in Claim 6, characterised in that the nematocidal agent is directly incorporated in the tray, pot or container in the form of steam-cooked cereal grains seeded with the predatory fungus claimed in Claim 1.

8. A method as claimed in Claim 7, characterised in that the nematocidal agent is incorporated in a quantity of approximately 3 g of steam-cooked cereal grains seeded with the predatory fungus per 100 g of soil.

9. A method as claimed in Claims 2 to 8, characterised in that colonisation of the soil with the nematocidal agent is carried out before or during the planting of plants which are not subject to Meloidogyne attacks because they only remain in the soil for a short while and/or because they complete their cycle in winter when the Meloidogynes are inactive, said colonisation enabling the soil to be prepared for subsequent planting by virtue of the residual effect of the nematocidal agent.

10. A nematocidal composition containing steam-cooked cereal grains seeded with the predatory fungus Arthrobotrys irregularis 1 141b.

11. A nematocidal composition as claimed in Claim 10, characterised in that said cereal grains are enriched by the addition of nutritive elements.

**Patentansprüche**

1. Neues nematophages Mittel, das bestimmt ist zur Bekämpfung von Nematoden der Art Meloidogyne, in Form des Stammes Arthrobotrys irregularis 1 141b, hinterlegt im Pilzarchiv (Mycothèque) des Institut Pasteur unter der Nummer 1166—78.

2. Verfahren zum Bekämpfen des Wachstums von Nematoden der Gattung Meloidogyne in Gemüse- und Blumenkulturen sowie in Baumschulen, dadurch gekennzeichnet, daß man in den zu behandelten Boden eine geeignete Menge des nematophagen Mittels nach Anspruch 1 einarbeitet.

3. Verfahren nach Anspruch 2, dadurch gekennzeichnet, daß das nematophage Mittel ungefähr 30 Tage vor dem Bepflanzen in den zu behandelnden Boden eingebracht wird.

4. Verfahren nach einem der Ansprüche 2 und 3, dadurch gekennzeichnet, daß für Feldkulturen die Besiedlung des Bodens (mit den Pilzen) durchgeführt wird durch Aufbringen und Unterpflügen von Getreidekörnern, die mit Dampf behandelt und mit oben angegebenen Pilzen nach Anspruch 1 beimpft sind.

5. Verfahren nach Anspruch 4, dadurch gekennzeichnet, daß ungefähr 50 bis 300 g mit dem oben angegebenen Pilz beimpfte Samenkörner pro m² des zu behandelten Bodens aufgebracht werden.

6. Verfahren nach einem der Ansprüche 2 und 3, dadurch gekennzeichnet, daß man für Pflanzen die in Ballen, Kübeln oder Behältern lieferbar sind, das nematophage Mittel direkt in das Innere des Ballens, Kübels oder Behälters einbringt.

7. Verfahren nach Anspruch 6, dadurch gekennzeichnet, daß das nematophage Mittel direkt in den Ballen, Kübel oder Behälter in Form von Getreidekörnern eingebracht wird, die mit Dampf behandelt und mit dem oben angegebenen Pilz nach Anspruch 1 beimpft worden sind.

8. Verfahren nach Anspruch 7, dadurch gekennzeichnet, daß ungefähr 3 g Getreidekörner, die mit Dampf behandelt und mit dem oben angegebenen Pilz beimpft worden sind, auf 100 g Erde eingebracht werden.

9. Verfahren nach einem der Ansprüche 2 bis 8, dadurch gekennzeichnet, daß die Besiedlung des Bodens (mit den Pilzen) durchgeführt wird vor oder während des Pflanzens von Pflanzen, die nicht von Meloidogynen angegriffen werden, weil sie nur sehr kurz an Ort und Stelle bleiben und/oder weil ihr (Vegetations-)Zyklus im Winter liegt, wo die Meloidogynen nicht aktiv sind, wobei die erwähnte Besiedlung es erlaubt, aufgrund der bleibenden Wirkung des nematophagen Mittels den Boden im Hinblick auf eine spätere Bepflanzung vorzubereiten.

10. Nematocides Mittel, enthaltend Getreidekörner, die mit Dampf behandelt und mit dem oben erwähnten Pilz Arthrobotrys irregularis 1 141b beimpft sind.

11. Mittels nach Anspruch 10, dadurch gekennzeichnet, daß den Getreidekörnern Nährstoffe zugesetzt sind.